(19) Europäisches Patentamt
European Patent Office
Office européen des brevets

(11) **EP 2 123 702 B1**

(12) **EUROPEAN PATENT SPECIFICATION**

(45) Date of publication and mention
of the grant of the patent:
**02.10.2013 Bulletin 2013/40**

(51) Int Cl.:
**C08J 7/06** (2006.01)          **C08J 7/12** (2006.01)

(21) Application number: **08711519.2**

(22) Date of filing: **19.02.2008**

(86) International application number:
**PCT/JP2008/052695**

(87) International publication number:
**WO 2008/102744 (28.08.2008 Gazette 2008/35)**

(54) **METHOD FOR PRODUCTION OF MOLDED RESIN ARTICLE**

VERFAHREN ZUR HERSTELLUNG EINES GEFORMTEN HARZARTIKELS

PROCÉDÉ DE PRODUCTION D'UN ARTICLE EN RÉSINE MOULÉE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **20.02.2007 JP 2007038955
31.05.2007 JP 2007144599**

(43) Date of publication of application:
**25.11.2009 Bulletin 2009/48**

(73) Proprietor: **Toray Industries, Inc.**
**Tokyo 103-8666 (JP)**

(72) Inventors:
• **TANAHASHI, Kazuhiro**
**Otsu-shi**
**Shiga 520-8558 (JP)**
• **ITO, Akihiko**
**Iyo-gun**
**Ehime 791-3193 (JP)**
• **SUGAYA, Hiroyuki**
**Otsu-shi**
**Shiga 520-8558 (JP)**

(74) Representative: **Webster, Jeremy Mark et al**
**Mewburn Ellis LLP**
**33 Gutter Lane**
**London**
**EC2V 8AS (GB)**

(56) References cited:
WO-A1-98/05269          WO-A2-2005/069889
JP-A- 07 207 049          JP-A- 56 125 435
JP-B1- 33 008 690          JP-B1- 33 008 985
US-A1- 2002 165 291          US-A1- 2003 082 625
US-A1- 2005 244 456

• DATABASE MEDLINE [Online] US NATIONAL
LIBRARY OF MEDICINE (NLM), BETHESDA, MD,
US; 2000, PARK K ET AL: "In vitro and in vivo
studies of PEO-grafted blood-contacting
cardiovascular prostheses.", XP002672626,
Database accession no. NLM11263803 &
JOURNAL OF BIOMATERIALS SCIENCE.
POLYMER EDITION 2000 LNKD- PUBMED:
11263803, vol. 11, no. 11, 2000, pages 1121-1134,
ISSN: 0920-5063
• KABANOV A V ET AL: "MICELLE FORMATION
AND SOLUBILIZATION OF FLUORESCENT
PROBES IN POLY(OXYETHYLENE-B-
OXYPROPYLENE-B-OXYETHYL ENE)
SOLUTIONS", MACROMOLECULES, AMERICAN
CHEMICAL SOCIETY, WASHINGTON, DC; US,
vol. 28, no. 7, 27 March 1995 (1995-03-27) , pages
2303-2314, XP000644770, ISSN: 0024-9297, DOI:
10.1021/MA00111A026

**Description**

Technical Field

The present invention relates to a method for producing a resin molding, which is particularly suited for a treatment of a protein and/or a peptide.

Background Art

As a post-genomic study, proteome analysis (proteomics) has begun to attract special interest recently. Since it is considered that a protein as a gene product is more directly linked to the pathologic conditions of diseases than a gene, it is expected that the results of proteome analysis of exhaustively examining a protein can be widely applied for diagnosis and treatment.

Rapid progress of proteome analysis considerably depends on the fact that it has become possible to carry out high-speed structural analysis using a mass spectrometer (MS). Practical application of MALDI-TOF-MS (matrix assisted laser desorption ionization time-of-flight mass spectrometry) enables high-throughput ultramicroanalysis of a polypeptide and also enables identification of a trace amount of a protein, which could have not been detected heretofore, and thus MALDI-TOF-MS has become a potent tool for searching of a disease-related factor.

Most bioactive proteins such as peptide hormones, interleukin and cytokines, which are considered to be a biomarker or etiology of pathologic conditions, exist only in an ultratrace amount (< ng/mL). The content is really in a nano- or pico-level when compared with a high-content component having a high molecular amount such as albumin. In view of the size of a protein, 70% or more of all kinds of proteins have a molecular weight of 60 kDa or less and most ultratrace-amount biomarker proteins are included in this range.

When a protein is handled, non-specific adsorption of a protein to a resin substrate surface of various analytical appliances, which are often used in the field of biochemistry, is always a problem. Since the non-specific adsorption to the substrate surface causes not only fluctuation in analytical results due to a decrease in a protein but also severe problems such as loss in a protein as an analyte, it is necessary to prevent non-specific adsorption. The decrease in the protein due to non-specific adsorption generally depends on a total concentration of the protein in a solution, and the decrease in the protein increases as the total concentration of the protein decreases. As described above, when a trace amount of an etiology-related component is analyzed by mass spectrometry in proteome analysis, there is no existing pre-treating apparatus which is subjected to a treatment for suppressing non-specific adsorption. Therefore, a total concentration of a protein of a fractionating liquid obtained by removing a component which inhibits detection is extremely low and a decrease/loss in a trace amount of biomarkerprotein due to non-specific adsorption constitutes a problem.

There are countermeasures, which are roughly classified into two major types, against a problem of a loss due to adhesion of a protein or a peptide. One is a method of adding a component capable of suppressing adsorption to a body component solution, and another one is a treatment for non-specific adsorption of a body component of a surface of a resin substrate. Typical methods of the former include a method of adding a blocking agent. This is a method in which a solution of albumin or casein is used as the blocking agent and adsorption of a useful body component is suppressed by competitive adsorption. The concentration of the blocking agent is generally adjusted to be higher than that of the useful body component because of competitive adsorption. Therefore, there is a risk that the blocking agent inhibits analysis and the body component undergoes structural change even when a small amount of the blocking agent is added. There is also a method of adding, in addition to the blocking agent, a surfactant, inorganic salts or an organic solvent. This method also has problems such as inhibition of an analytical system and denaturation caused by a structural change of a body component, similar to the case of the blocking agent.

A general treatment for non-specific adsorption of a substrate surface includes a hydrophilization treatment of a substrate surface. The hydrophilization treatment includes several methods. Patent Document 1 describes a method of introducing a hydrophilic component, for example, 2-methacryloyloxyethylphosphorylcholine copolymer (hereinafter abbreviated to MPC) into a substrate by a coating treatment. Patent Documents 2 to 6 describe methods of introducing a hydrophilic component by a grafting treatment. There is also proposed a method of directly producing a hydrophilic functional group to a substrate surface, like a reactive ion etching treatment, a plasma treatment, or an ion cluster beam treatment.

In a conventional substrate surface treatment, when a substrate subjected to such a treatment is brought into contact with a solution of a high concentration of a protein or a peptide, the effect of suppressing adsorption of a body component is recognized. However, when the substrate is brought into contact with a solution containing a low concentration of a body component, a decrease or loss in the body component due to adsorption still occurs, and thus this treatment does not correspond to a level sufficient to solve the problems.

Furthermore, in a technique using a coating treatment with a hydrophilic polymer, when the treated substrate is brought into contact with a solvent using a hydrophilic polymer solution, hydrophilicity may deteriorate as a result of peeling of a coating. In an apparatus for treatment of analysis or separation, an eluted hydrophilic polymer can be an inhibiting factor of the subsequent analysis.

Hydrophilization by hydrophilic polymer grafting has a problem that, when the concentration of a hydrophilic polymer solution to be treated increases, hydrophilic polymers are three-dimensionally crosslinked with each other, and thus motility of the hydrophilic polymer decreases and the adhesion inhibiting effect of the body component decreases, although hydrophilicity is improved in proportion to a grafting amount. Furthermore, the method described in Patent Document 6 cannot exert sufficient effects under a condition such as a low salt concentration where protein adsorption is more likely to occur.

Although a reactive ion etching treatment, a plasma treatment and an ion cluster beam treatment facilitate simple hydrophilization of an external surface of a substrate or one surface of a plate-like substrate, it is difficult to hydrophilize the portion being the shadow of plasma or ion cluster beams. Therefore, these treatments are not suited for hydrophilization of a molding having a complicated shape by a single treatment. Adsorption characteristics of a body component of a substrate depend on a surface state of the portion which is brought into contact with the body component. In general, adsorption of the body component to the substrate surface is suppressed as hydrophilicity of the surface hydrophilic becomes higher and motility of hydrophilic molecules immobilized onto the surface becomes higher. It is considered that a hydrophilic molecule having high motility removes body components such as protein and platelet by its molecular motion. Hydrophilization by a reactive ion etching treatment, a plasma treatment and an ion cluster beam treatment shows lower motility of the hydrophilic molecule when compared with hydrophilization by production of a hydrophilic functional group such as a hydroxyl group on a substrate surface, namely, introduction of a hydrophilic polymer into a substrate surface. Therefore, the body component has an unpreferred low adhesion inhibiting effect. Furthermore, the substrate may cause denaturation since the temperature may become higher during a treatment.

Since a technique for a treatment of the suppression of adsorption of a protein or a peptide has never been established, a resin molding with less adsorption has never been realized.

Patent Document 1: Published Japanese Translation No. 2002-542163 of the PCT Application
Patent Document 2: Japanese Unexamined Patent Publication (Kokai) No. 2003-130882
Patent Document 3: Japanese Unexamined Patent Publication (Kokai) No. 58-40323
Patent Document 4: Japanese Patent No. 3,297,707
Patent Document 5: Japanese Unexamined Patent Publication (Kokai) No. 61-225653
Patent Document 6: International Publication No. WO 06/025352 pamphlet.

Park et al. (2000), Journal of Biomaterials Science, Polymer Edition, 11:11, 1121-1134 describes PEO-grafted blood-contacting cardiovascular protheses; US 2005/024456 A1 describes coatings comprising protein resistant and therapeutic components on medical devices; WO 98/05269 describes methods for grafting PEO to the surfaces of metals and glasses; and WO 2005/069889 A2 describes compositions and methods of preparing functional thin films or surface coating with low non-specific binding.

Disclosure of the Invention

Problems to be Solved by the Invention

As described above, in the field of operation of an ultratrace amount of a biological substance such as clinical proteome analysis, there is a problem that a loss in a protein occurs due to non-specific adsorption of a protein or peptide to a molding surface, and thus it is impossible to carry out a stable treatment and analysis. It is essential to suppress non-specific adsorption of a protein to a substrate surface so as to carry out a stable treatment and analysis, and an object is to provide a technique of suppressing adsorption to a resin molding made of polystyrene, polyethylene, polypropylene, polycarbonate or polyvinyl chloride which is often used in this field.

Means for Solving the Problems

In order to achieve the above object, in the present invention, the method of claim 1 is employed. Also described herein are the following means.

(1) A method for producing a resin molding, comprising a step of bringing an aqueous solution of a nonionic surfactant into contact with a resin molding and a step of irradiating the resin molding contacted with the aqueous solution with radiation rays, wherein a concentration of the surfactant in the aqueous solution is 0.05 times to 500 times a critical micelle concentration of the surfactant at 25°C.

(2) The method for producing a resin molding according to (1), wherein the aqueous solution contains water-soluble inorganic salts in a concentration of 50 mmol/L to 300 mmol/L.

(3) The method for producing a resin molding according to (1) or (2), wherein the surfactant is represented by the formula 1:
[Chemical Formula 1]

$$R_1\text{-}(OR_2)_n\text{-}OR_3 \qquad \text{Formula 1}$$

wherein $R_1$ represents a linear or branched alkyl group having 1 to 30 carbon atoms, an alkenyl group, an alkynyl group, or $R_4$- A- (in which $R_4$ represents a linear or branched alkyl, alkenyl or alkynyl group having 1 to 18 carbon atoms, and A represents a phenylene group), $R_2$ represents an alkylene group having 2 or 3 carbon atoms, $R_3$ represents H, $CH_3$ or $CH_2CH_3$, and n represents a number of 1 to 100.

(4) The method for producing a resin molding according to (3), wherein $R_2$ has 2 carbon atoms.

(5) The method for producing a resin molding according to (3) or (4), wherein n is a number of 5 to 80.

(6) The method for producing a resin molding according to any one of (3) to (5), wherein $R_1$ has 5 to 25 carbon atoms.

(7) The method for producing a resin molding according to any one of (3) to (6), wherein $R_1$ is $R_4$-A- and $R_4$ has 7 to 10 carbon atoms.

(8) The method for producing a resin molding according to any one of (1) to (7), wherein the surfactant has HLB of 10 or more.

Effect of the Invention

According to the present invention, it is possible to obtain a resin molding in which body components, particularly a protein and a peptide, are less likely to adsorb on a surface. According to such a resin molding, a loss in a protein as an analyte can be reduced.

Best Mode for Carrying Out the Invention

The resin molding produced by the present invention is suitably used for a treatment of a protein and/or a peptide. The treatment as used herein means an operation of handling a protein and/or a peptide, which is carried out in the fields of biochemistry, biology, analystic chemistry, forestry and fisheries, foods, medical science, pharmaceutical sciences and the like, and is not limited to only storage, conservation, collection and dispensing of a protein and/or a peptide, or a solution containing the same, and also includes operations of reaction, analysis, separation, purification, concentration and drying. Therefore, there is no particular limitation on the shape of the molding and the molding can have various shapes such as yarn, hollow yarn, fibers, knitting fabric, film, flat membrane, hollow fiber membrane, particles, tubes, rods, vessels and the like according to the purposes and applications.

There is no particular limitation on the kind of the resin, and the resin is appropriately selected from vinyl-based polymers or acrylic polymers, such as polyethylene, polypropylene, polyvinyl chloride, polyvinylidene chloride, polystyrene, polyvinyl acetate, polyacrylate, polymethacrylate, polymethyl methacrylate, polyacrylonitrile, polyisoprene and polybutadiene; polyamide-based polymers such as nylon; polyimide-based polymers; polyurethane-based polymers; polyester-based polymers such as polyethylene terephthalate, polybutylene terephthalate, polylactic acid and polyglycolic acid; fluorine-based polymers such as polytetrafluoroethylene, polyvinylidene fluoride and perfluoropolymer; polycarbonate, polyphenylene oxide, polyphenylene sulfide, polysulfone, polyethersulfone, polyether ether ketone, silicon resin, natural rubber, cellulose, cellulose acetate and the like. It is also possible to use copolymers composed of the above polymers and resins obtained by blending the above polymers.

In the present invention, there is no particular limitation on weight average molecular weight, number average molecular weight, molecular weight polydispersity and crystallinity of the resin, and any resin capable of being molded can be used. A molding can be composed of only a resin, or can be a molding in which a resin locally exists on a surface.

The above resin molding is used for a treatment of a protein. When the protein is dissolved in water, a hydrophilic domain exists on a surface of a protein molecule and a hydrophobic domain exists inside the protein. It is considered that, when the protein is brought into contact with a hydrophobic substrate, the hydrophobic domain inside the protein is exposed on the surface and is adsorbed on the substrate through a hydrophobic interaction. Therefore, hydrophilization of a substrate surface is effective so as to suppress adsorption of the protein.

Therefore, in the present invention, the above- mentioned resin molding is brought into contact with an aqueous solution of a nonionic surfactant, thereby physicochemically adsorbing the surfactant on a surface of the resin molding surface. In the present invention, contact with an aqueous solution means that an aqueous solution of the surfactant is brought into contact with a surface of a resin molding by immersing said resin molding in the aqueous solution since it enables a uniform treatment.

In the present invention, it is essential that the nonionic surfactant is soluble in water at a temperature within a range from 1°C to 100°C. The surfactant can be a surfactant which produces no precipitate in an aqueous solution, or can be dissolved as a nanosphere or microsphere, such as a micelle or liposome.

The nonionic surfactant is an organic component represented by the formula 1:

[Chemical Formula 2]

$$R1\text{-}(OR_2)_n\text{-}OR_3 \qquad \text{Formula 1}$$

wherein $R_1$ represents a linear or branched alkyl group having 1 to 30 carbon atoms, an alkenyl group, an alkynyl group, or $R_4$- A- (in which $R_4$ represents linear or branched alkyl, alkenyl or alkynyl group having 1 to 18 carbon atoms, and A represents a phenylene group), $R_2$ represents an alkylene group having 2 or 3 carbon atoms, $R_3$ represents H, $CH_3$ or $CH_2CH_3$, and n represents a number of 1 to 100.

The nonionic surfactant is adsorbed on a surface of a resin molding via a hydrophobic $R_1$ segment by bringing an aqueous solution of the nonionic surfactant into contact with a resin molding, while the surface is hydrophilized by a hydrophilic polyoxyalkylene segment $(OR_2)_n$. The polyoxyalkylene segment $(OR_2)_n$ extends in a protein solution and therefore exerts, in addition to the effect of hydrophilization, the excluded volume effect through a micro-Brownian motion of a hydrophilic polymer chain. Therefore, the resin molding obtained by the present invention can exert a protein adsorption suppressing effect.

Non-adsorptivity of a protein or a peptide depends on the amount of the nonionic surfactant which is physicochemically adsorbed before irradiation with radiation rays and is chemically immobilized by irradiation with radiation rays. Therefore, it is important to properly control the adsorbed amount of the nonionic surfactant in a step of contact with an aqueous solution.

One of factors, which determine the absorbed amount of the surfactant, is hydrophilic-lipophilic balance (HLB). HLB as used herein can be theoretically calculated from a chemical structure by Griffin's method in the following manner. A hydrophilic moiety of a water-soluble component in the following equation means a segment of $(OR_2)_n\text{-}OR_3$ in the case of the formula (1).

[Equation 1]

$$\text{Theoretical HLB value} = 20 \times (Wp/Ws)$$

Wp: a molecular weight of a hydrophilic moiety of a water-soluble component

Ws: a molecular weight of a water-soluble component

When the theoretical HLB value is too small, solubility in water decreases because of poor hydrophilicity. In contrast, when the theoretical HLB value is too large, adsorption to a surface of a resin molding decreases because of poor lipophilicity. Therefore, HLB is preferably 10 or more and 20 or less, and most preferably 12 or more and 19 or less.

Solubility in water and a dissolved state in water of the nonionic surfactant represented by the formula 1 are determined by a balance between a hydrophilic polyoxyalkylene segment and a hydrophobic $R_1$ segment. A chemical structure of $R_1$ is not particularly limited as long as it is a linear or branched alkyl group having 1 to 30 carbon atoms, an alkenyl group, an alkynyl group, or $R_4$-A- (in which $R_4$ represents a linear or branched alkyl, alkenyl or alkynyl group having 1 to 18 carbon atoms, and A represents a phenylene group). The chemical structure having smaller number of carbon atoms causes a decrease in an interaction with a resin surface, while the chemical structure having larger number of carbon atoms causes a decrease in water solubility at room temperature. Therefore, the number of carbon atoms of $R_1$ is preferably from 5 to 25. When $R_1$ is $R_4$-A-, the number of carbon atoms of $R_4$ is preferably from 7 to 10 in view of the above reason and availability.

When the polymerization degree of the polyoxyalkylene segment is too short, water solubility at room temperature decreases. In contrast, when the polymerization degree is too long, interaction with a resin surface is weakened. Therefore, n is preferably from 1 to 100. The upper limit is preferably 80 or less, and more preferably 50 or less. In contrast, the lower limit is preferably 5 or more.

The number of carbon atoms of the alkylene chain $R_2$ of the polyoxyalkylene segment is 2 or 3, and apolyoxyalkylene is polyoxyethylene or polyoxypropylene. In view of high affinity with water, polyoxyethylene is particularly preferred.

$R_3$ as the end of the polyoxyalkylene chain is an H group, a $CH_3$ group or a $CH_2CH_3$ group, and an H group having highest hydrophilicity is most preferred.

When $R_1$ is $R_4$-A- in the formula 1, $R_4$ and a polyoxyalkylene segment may be combined at any position of a phenylene group A. In view of high safety and ease of synthesis, a 1,4 (para) substituted compound is most preferred. In the phenylene group A, the position, at which $R_1$ and a polyoxyalkylene segment are not bonded, may be substituted with another substituent as long as water solubility does not change.

Specific examples of the nonionic surfactant represented by the formula 1 include Triton X-45, Triton X-100, Triton X-114, Triton X-165, Triton X-200, Triton X-305, Triton X-405, Triton X-705, Triton N-60, Triton N-101, Triton N-111, Triton N-150, Polyoxyethylene(8)Octylphenyl Ether, Polyoxyethylene(9)Octylphenyl Ether, Polyoxyethylene(10) Octylphenyl Ether, Polyoxyethylene (5)Nonylphenyl Ether, Polyoxyethylene (10)Nonylphenyl Ether, Polyoxyethylene (15)Nonylphenyl Ether and Polyoxyethylene (20)Nonylphenyl Ether. In these nonionic surfactants, $R_1$ in the formula 1 is $R_4$-A-, $R_4$ has 8 or 9 carbon atoms, a repeating number n in a polyoxyalkylene segment $(OR_2)_n$ is from 10 to 70, an alkylene chain $R_2$ in the same segment has 2 carbon atoms, and $R_3$ is H. $R_4$ and a polyoxyalkylene segment are combined at the 1,4 (para) position to a henylene group.

Specific examples of another nonionic surfactant include Brij30, Brij35, Brij56, Brij58, Brij78, Brij97, Brij98, Polyoxyethylene(6)Decyl Ether, Polyoxyethylene(9)Decyl Ether, Polyoxyethylene(12)Decyl Ether, Polyoxyethylene(20) Cetyl Ether, Polyoxyethylene(10)Dodecyl Ether, Polyoxyethylene(23)Lauryl Ether, Polyoxyethylene (7)Oleyl Ether, Polyoxyethylene (10)Oleyl Ether, Polyoxyethylene (20)Oleyl Ether, Polyoxyethylene (50)Oleyl Ether, Polyoxyethylene (4) Stearyl Ether and Polyoxyethylene (20)Stearyl Ether. In these nonionic surfactants, $R_1$ in the formula 1 has 10 to 18 carbon atoms, a repeating number n in a polyoxyalkylene segment $(OR_2)_n$ is from 6 to 23, an alkylene chain $R_2$ in the same segment has 2 carbon atoms, and $R_3$ is H.

When such a nonionic surfactant is adsorbed on a resin surface, if the concentration in an aqueous solution is too low, an absolute amount capable of exerting the adsorption suppressing effect is low. In contrast, if the concentration in an aqueous solution is too high, an excess amount of a surfactant is accumulated on a surface, and thus not only efficiency of the reaction of bonding a radical on a surface is likely to decrease, but also it is hard to effectively exert the excluded volume effect of a polyoxyalkylene segment. Therefore, the concentration in the aqueous solution is preferably 0.05 times to 500 times, and most preferably 0.1 times to 200 times, a critical micelle concentration at 25°C of the nonionic surfactant.

For example, the critical micelle concentration as used herein can be evaluated in the following manner.

(Measurement conditions)

Measuring apparatus: CBVP-A3 manufactured by Kyowa Interface Science Co., Ltd. (an apparatus capable of obtaining the same results under the same conditions can be used without causing any problem)
Temperature of testing room: 25°C
Humidity of testing room: 60%
Plate: Platinum plate

A surface tension was measured under these conditions and each value of the surface tension thus obtained is plotted against a concentration (a logarithmic concentration) of a water-soluble nonionic surfactant to obtain a diagram. Then, the lowest concentration at which the surface tension shows a fixed value (a critical micelle concentration) is determined by the diagram.

For the same reason, the concentration of the water-soluble nonionic surfactant concentration is preferably 0.001% by weight or more and 1% by weight or less, and most preferably 0.01% by weight or more and 1% by weight or less.

In the production method of the present invention, since a water-soluble nonionic surfactant is bonded to a surface of a resin molding using radiation rays, it is preferred to allow water-soluble inorganic salts to coexist in an aqueous solution of the surfactant. The water-soluble inorganic salts have the effect of increasing a hydrophobic interaction between the surfactant and the surface of the resin molding. There is no particular limitation on water-soluble inorganic salts and, for example, hydrochlorides, sulfates, carbonates and phosphates of lithium, sodium, potassium, calcium, magnesium, ammonium, iron and zinc are preferably used. There is no particular limitation on the concentration of the water-soluble inorganic salts. When the concentration is too low, the effect of increasing the hydrophobic interaction between the surfactant and the surface of the resin molding deteriorates. In contrast, when the concentration is too high, solubility of the surfactant decreases. Therefore, the concentration is preferably 50 mmol/L or more and 300 mmol/L or less, and most preferably 100 mmol/L or more and 300 mmol/L or less, based on the aqueous solution.

Subsequently, in the present invention, the nonionic surfactant adsorbed on the surface of the resin molding is chemically bonded to the surface of the resin molding, as described above. Radiation rays are used for bonding. By irradiating radiation rays on the surface of the resin molding after contacting with the aqueous solution, the resin molding and the surfactant are bonded. A hydroxy radical, which is active in water, is generated by energy of radiation rays, and the radical draws a resin or water-soluble nonionic surface-active hydrogen to generate a new radical, thus causing continuous progress of a radical reaction and binding on the surface of the resin molding.

As radiation rays, for example, $\alpha$- rays, $\beta$- rays, $\gamma$- rays, X- rays, ultraviolet rays and electron beams are used. Recently, electromagnetic rays such as γ- rays and electron beams have widely been used for sterilization in view of convenience and are preferably used. The dose of radiation rays is preferably 0.01 kGy or more and 100 kGy or less, more preferably 0.1 kGy or more and 50 kGy or less, particularly preferably 0.5 or more, and most preferably 40 kGy or less, in view of efficiency of bonding to the surface and prevention of deterioration of the resin substrate.

According to these steps, the nonionic surfactant is chemically bonded to the surface of the resin molding through a covalent bond, thus obtaining a surface which is **characterized in that** the surfactant is not eluted and the adsorption suppressing effect is allowed to persist.

The surfactant bonded on the surface of the resin molding is detected by analysis of a chemical structure. Analysis can be carried out by utilizing the fact that the molding surface is composed of only a resin, while the surfactant has a polyoxyalkylene. For example, an ion fragment peculiar to a polyalkylene oxide group can be detected by Time of Flight Secondary Ion Mass Spectrometer (TOF-SIMS). When the surfactant has a phenylene group, a signal attributed to a carbon-oxygen bond at 1,100 to 1,300 $cm^{-1}$ of an ATR-IR spectrum is a specific signal which is not observed in a resin such as polypropylene or polystyrene.

Examples

The present invention will be described in detail by way of Examples, but the scope of the present invention is not limited to only these Examples.

Method for evaluation of adsorptivity using $\beta_2$-microglobulin

With respect to evaluation of adsorption of a protein to a substrate surface, the case of carrying out an adsorption test using a solution of human $\beta_2$-microglobulin (marketed by SIGMA, Cat. No. M4890) (hereinafter abbreviated to β2-MG) will be explained.

An aqueous 25 mmol/L ammonium bicarbonate solution (pH 8.2) containing β2-MG (500 ng/ml) and human serum albumin (marketed by SIGMA, Cat. No. A1653) (hereinafter abbreviated to HSA) (500 ng/ml) was used as a protein solution (hereinafter abbreviated to a protein solution A). Since the protein in the protein solution A is also adsorbed on a vessel used for preparation, as the vessel used for preparation of the protein solution, a vessel blocked preliminarily with bovine serum albumin (marketed by Nacalai Tesque, Inc., Cat. No. 01863-35) (hereinafter abbreviated to BSA) was used. A blocking operation of the vessel was carried out by allowing a centrifugation tube (manufactured by Greiner Bio-One GmbH, CELLSTAR TUBES, 15 mL) to stand in a 1% BSA phosphate buffered saline (hereinafter abbreviated to PBS) solution for 30 minutes and washing the centrifugation tube three times with PBS, then three times with distilled water. The protein solution A prepared by the centrifugation tube thus blocked was used for an adsorption test in the following manner.

To a test tube as a resin molding, 100 μl of the protein solution A was added, followed by standing at 26°C for 1 hour. After 1 hour, the protein solution in the test tube was collected and then diluted 10 times with a 1% BSA PBS solution. The resulting solution was used for the measurement of a concentration (c) of β2-MG. Also with respect to the protein solution A before dispensing in the resin test tube, a concentration (b) of β2-MG was measured.

The concentration (b) of β2-MG was measured by a β2-MG measuring kit (marketed by Wako Pure Chemical Industries, Ltd., Glazyme $\beta_2$-microgloblin EIA TEST, Code. 305-11011) in accordance with a manual adsorbed to the kit. A reaction vessel blocked preliminarily with a 1% BSA PBS solution for 30 minutes in accordance with a partially modified adsorbed manual was used upon a first reaction. An adsorption rate (a) of a protein was calculated by the following equation and the case where the adsorption rate is 50% or less was taken as a non-adsorption surface.

[Equation 2]

$$(a) = ((b)-(c))/(b) \times 100$$

(a): a plastic test tube protein adsorption rate (%)
(b): a concentration (ng/mL) of β2-MG in a protein solution A
(c): an amount (ng/mL) of β2-MG in a sample solution after evaluation in a test tube for 1 hour

Method for measurement of critical micelle concentration

(Measurement conditions)

> Measuring apparatus: CBVP-A3 (manufactured by Kyowa Interface Science Co., Ltd.)
> Temperature of testing room: 25°C
> Humidity of testing room: 60%
> Plate: test plate

An aqueous solution of a nonionic surfactant was charged in a vessel and a surface tension was measured in accordance with an adsorbed manual of CBVP-A3. With respect to a different concentration of the nonionic surfactant, the surface tension was carried out in the same manner. Each surface tension value was plotted against a concentration (a logarithmic concentration) of the nonionic surfactant, and then a critical micelle concentration of the nonionic surfactant was determined by determining the lowest concentration at which the surface tension shows a fixed value.

Test Example 1

Five resin test tubes (manufactured by BECTON DICKINSON, "5 ml Polypropylene Round-Bottom Tube") were immersed in 100 ml of each aqueous Triton X-100 (marketed by Wako Pure Chemical Industries, Ltd., Cat No. 168-11805) solution having a concentration of 0.001, 0.01, 0.1 or 1%, and then irradiated with $\gamma$-rays. An absorbed dose of $\gamma$-rays was 25 kGy. The test tubes were taken out from the aqueous solution, washed three times with 500 ml of running water and then air-dried at room temperature. Three test tubes for each different concentration among these test tubes were subjected to a human $\beta$2-MG adsorption test and an average of an adsorption rate was determined. The conditions are shown in Table 1 and the results are shown in Table 2.

Test Example 2

Five resin test tubes (manufactured by BECTON DICKINSON, "5 ml Polypropylene Round-Bottom Tube") were immersed in 100 ml of each aqueous polyoxyethylene (10)nonylphenyl ether (marketed by Wako Pure Chemical Industries, Ltd., Cat No. 320-33722) solution having a concentration of 0.0001, 0.001, 0.001, 0.01 or 0.1%, treated in the same manner as in Test Example 1 and then subjected to a human $\beta$2-MG adsorption test. The conditions are shown in Table 1 and the results are shown in Table 2.

Test Example 3

Five resin test tubes (manufactured by BECTON DICKINSON, "5 ml Polystyrene Round-Bottom Tube") were immersed in 100 ml of each aqueous Triton X-100 (marketed by Wako Pure Chemical Industries, Ltd., Cat No. 168-11805) solution having a concentration of 0.001, 0.01, 0.1 or 1%, treated in the same manner as in Test Example 1 and then subjected to a human $\beta$2-MG adsorption test. The conditions are shown in Table 1 and the results are shown in Table 2.

Test Example 4

Five resin test tubes (manufactured by BECTON DICKINSON, "5 ml Polystyrene Round-Bottom Tube") were immersed in 100 ml of each aqueous Triton X-705 (marketed by SIGMA, Cat No. X70570-100ML) solution having a concentration of 0.001, 0.01, 0.1, 1, 2 or 5%, treated in the same manner as in Test Example 1 and then subjected to a human $\beta$2-MG adsorption test. The conditions are shown in Table 1 and the results are shown in Table 2.

Test Example 5

Five resin test tubes (manufactured by BECTON DICKINSON, "5 ml Polystyrene Round-Bottom Tube") were immersed in 100 ml of each aqueous Triton X-405 (marketed by SIGMA, Cat No. X405-100ML) solution having a concentration of 0.0001, 0.001, 0.01, 0.1 or 1%, treated in the same manner as in Test Example 1 and then subjected to a human $\beta$2-MG adsorption test. The conditions are shown in Table 1 and the results are shown in Table 2.

Test Example 6

Five resin test tubes (manufactured by BECTON DICKINSON, "5 ml Polystyrene Round-Bottom Tube") were immersed in 100 ml of each aqueous Triton X-45 (marketed by SIGMA, Cat No. X45-100ML) solution having a concentration of 0.01, 0.1, 1, 2 or 5%, treated in the same manner as in Test Example 1 and then subjected to a human $\beta$2-MG adsorption test. The conditions are shown in Table 1 and the results are shown in Table 2.

Test Example 7

Five resin test tubes (manufactured by BECTON DICKINSON, "5 ml Polystyrene Round-Bottom Tube") were immersed in 100 ml of each aqueous Brij 58 (marketed by SIGMA, Cat No. P5884-100G) solution having a concentration of 0.0001, 0.001, 0.01, 0.1 or 1%, treated in the same manner as in Test Example 1 and then subjected to a human $\beta$2-MG adsorption test. The conditions are shown in Table 1 and the results are shown in Table 2.

Test Example 8

Five resin test tubes (manufactured by BECTON DICKINSON, "5 ml Polypropylene Round-Bottom Tube") were immersed in 100 ml of each aqueous Brij 58 (marketed by SIGMA, Cat No. P5884-100G) solution having a concentration of 0.0001, 0.001, 0.01 or 0.1%, treated in the same manner as in Test Example 1 and then subjected to a human $\beta$2-MG  adsorption test. The conditions are shown in Table 1 and the results are shown in Table 2.

Test Example 9

Five resin test tubes (manufactured by BECTON DICKINSON, "5 ml Polystyrene Round-Bottom Tube") were immersed in 100 ml of each aqueous 0.1% Triton X-100 (marketed by Wako Pure Chemical Industries, Ltd., Cat No. 168-11805) solution containing 100, 200 or 300 mmol/L of sodium chloride, treated in the same manner as in Test Example 1 and then subjected to a human $\beta$2-MG adsorption test. The conditions are shown in Table 1 and the results are shown in Table 2.

Test Example 10

Five resin test tubes (manufactured by BECTON DICKINSON, "5 ml Polystyrene Round-Bottom Tube") were immersed in 100 ml of each aqueous 0.1% Triton X-305 (marketed by SIGMA, Cat No. X305-500ML) solution containing 100, 200 or 300 mmol/L of sodium chloride, treated in the same manner as in Test Example 1 and then subjected to a human $\beta$2-MG adsorption test. The conditions are shown in Table 1 and the results are shown in Table 2.

Test Example 11

A trial of preparing an aqueous solution Triton X-15 (marketed by SIGMA, Cat No. X15-500ML) was made. However, since it was impossible to dissolve, the same $\gamma$-ray treatment as that in Test Example 1 of the resin test tube could not be carried out.

Test Example 12

Five resin test tubes (manufactured by BECTON DICKINSON, "5 ml Polypropylene Round-Bottom Tube") were immersed in 100 of an aqueous 0.01% Triton X-100 solution. Without being irradiated with $\gamma$-rays, the test tubes were treated in the same manner as in the post-treatment after irradiation with $\gamma$-rays of Test Example 1. Three test tubes among these test tubes were subjected to a human $\beta$2-MG adsorption test and an average of an adsorption rate was determined. The conditions are shown in Table 1 and the results are shown in Table 2.

Test Example 13

Five resin test tubes (manufactured by BECTON DICKINSON, "5 ml Polystyrene Round-Bottom Tube") were immersed in 100 ml of an aqueous 0.01% Triton X-100 solution. Without being irradiated with $\gamma$-rays, the test tubes were treated in the same manner as in the post-treatment after irradiation with $\gamma$-rays of Test Example 1.  Three test tubes among these test tubes were subjected to a human $\beta$2-MG adsorption test and an average of an adsorption rate was determined. The conditions are shown in Table 1 and the results are shown in Table 2.

Test Example 14

In accordance with the method described in Patent Document 6, five resin test tubes (manufactured by BECTON DICKINSON, "5ml Polyprpylene Round-Bottom Tube") were immersed in 100 ml of an aqueous 0.1% polyvinyl alcohol (POVAL205, manufactured by Kuraray Co., Ltd.) solution in which a critical micelle concentration does not exist, and then irradiated with γ-rays. An absorbed dose of γ-ray was 25 kGy. The resin test tubes were taken out from the aqueous polyvinyl alcohol solution, washed with 500 ml of running water 500 ml and then dried in an oven at 70°C for 1 hour. Three test tubes among these test tubes were subjected to a human β2-MG adsorption test and an average of an adsorption rate was determined. The conditions are shown in Table 1 and the results are shown in Table 2.

Test Example 15

In accordance with the method described in Patent Document 6, five resin test tubes (manufactured by BECTON DICKINSON, "5ml Polyprpylene Round-Bottom Tube") were  immersed in 100 ml of an aqueous 0.1% polyvinyl alcohol (POVAL205, manufactured by Kuraray Co., Ltd.) solution in which a critical micelle concentration does not exist, and then irradiated with γ-rays. An absorbed dose of γ-ray was 25 kGy. The resin test tubes were taken out from the aqueous polyvinyl alcohol solution, washed with 500 ml of running water 500 ml and then dried in an oven at 70°C for 1 hour. Three test tubes among these test tubes were subjected to a human β2-MG adsorption test and an average of an adsorption rate was determined. The conditions are shown in Table 1 and the results are shown in Table 2.

Test Example 16

Five resin test tubes (manufactured by BECTON DICKINSON, "5 ml Polypropylene Round-Bottom Tube") were washed with 500 ml of running water and then air-dried at room temperature. Three test tubes among these test tubes were subjected to a human β2-MG adsorption test and an average of an adsorption rate was determined. The conditions are shown in Table 1 and the results are shown in Table 2.

Test Example 17

Five resin test tubes (manufactured by BECTON DICKINSON, "5 ml Polystyrene Round-Bottom Tube") were washed with 500 ml of running water 500 ml and then air-dried at room temperature. Three test tubes among these test tubes were subjected to a human β2-MG adsorption test and an average of an adsorption rate was determined. The conditions are shown in Table 1.

Table 1

| | Nonionic surfactant | Water solubility | Chemical structure (number of carbon atoms) | | | | | Molecular weight |
|---|---|---|---|---|---|---|---|---|
| | | | $R_1$ | $R_2$ | A | n | $R_3$ | |
| Test Example 1 | TritonX100 | soluble | 8 | 2 | exist | 10 | H | 646 |
| Test Example 2 | TritonN100 | soluble | 9 | 2 | exist | 10 | H | 660 |
| Test Example 3 | TritonX100 | soluble | 8 | 2 | exist | 10 | H | 646 |
| Test Example 4 | TritonX705 | soluble | 8 | 2 | exist | 70 | H | 3286 |
| Test Example 5 | TritonX405 | soluble | 8 | 2 | exist | 40 | H | 1966 |
| Test Example 6 | TritonX45 | soluble | 8 | 2 | exist | 5 | H | 382 |
| Test Example 7 | Brij58 | soluble | 16 | 2 | none | 20 | H | 1122 |
| Test Example 8 | Brij58 | soluble | 16 | 2 | none | 20 | H | 1122 |
| Test Example 9 | TritonX100 | soluble | 8 | 2 | exist | 10 | H | 646 |
| Test Example 10 | TritonX305 | soluble | 8 | 2 | exist | 30 | H | 1526 |
| Test Example 11 | TritonX15 | insoluble | 8 | 2 | exist | 1 | H | 440 |
| Test Example 12 | TritonX100 | insoluble | 8 | 2 | exist | 10 | H | 646 |
| Test Example 13 | TritonX100 | soluble | 8 | 2 | exist | 10 | H | 646 |
| Test Example 14 | PVA | | | | | | | |
| Test Example 15 | PVA | | | | | | | |
| Test Example 16 | None | | | | | | | |
| Test Example 17 | None | | | | | | | |

EP 2 123 702 B1

Table 1 (Continued)

| | Physical properties | | | | Substrate | γ-rays |
|---|---|---|---|---|---|---|
| | Critical micelle concentration | | | HLB | | |
| | (mmol/L) | (%) | 0.05 times to 500 times value (%) | | | |
| Test Example 1 | 0.320 | 0.021 | 0.00105-10.5 | 14.1 | PP | irradiated |
| Test Example 2 | 0.110 | 0.007 | 0.0035-3.5 | 13.8 | PP | irradiated |
| Test Example 3 | 0.320 | 0.021 | 0.00105-10.5 | 14.1 | PSt | irradiated |
| Test Example 4 | 2.739 | 0.900 | 0.045-450 | 18.8 | PSt | irradiated |
| Test Example 5 | 0.810 | 0.159 | 0.00795-79.5 | 18.1 | PSt | irradiated |
| Test Example 6 | 0.120 | 0.005 | 0.00025-2.5 | 11.1 | PSt | irradiated |
| Test Example 7 | 0.077 | 0.009 | 0.00045-4.5 | 16 | PSt | irradiated |
| Test Example 8 | 0.077 | 0.009 | 0.00045-4.5 | 16 | PP | irradiated |
| Test Example 9 | 0.320 | 0.021 | 0.00105-10.5 | 14.1 | PSt | irradiated |
| Test Example 10 | 0.650 | 0.099 | 0.00495-49.5 | 17.4 | PSt | irradiated |
| Test Example 11 | 0.050 | 0.0022 | 0.00011-1.1 | 4.9 | - | - |
| Test Example 12 | 0.320 | 0.0207 | 0.001035-10.35 | 14.1 | PP | not irradiated |
| Test Example 13 | 0.320 | 0.0207 | 0.001035-10.35 | 14.1 | PSt | not irradiated |
| Test Example 14 | | | | | PP | irradiated |
| Test Example 15 | | | | | PSt | irradiated |
| Test Example 16 | | | | | PP | not irradiated |
| Test Example 17 | | | | | PSt | not irradiated |

12

Table 2

| | Adsorption rate (%) of protein | | | | | | | | | |
| | Concentration (%) of nonionic surfactant | | | | | | | Concentration (mM) of NaCl (0.1% compound) | | |
| | 0.0001 | 0.001 | 0.01 | 0.1 | 1 | 2 | 5 | 100 | 200 | 300 |
|---|---|---|---|---|---|---|---|---|---|---|
| Test Example 1 | | 51.8 | 45.5 | 33.7 | 42.5 | | | | | |
| Test Example 2 | 55.9 | 48.7 | 37.4 | 34.3 | | | | | | |
| Test Example 3 | | 61.8 | 42.1 | 26.8 | 26.6 | | | | | |
| Test Example 4 | | 71.1 | 55.3 | 25.8 | 6.3 | 21.2 | 10.5 | | | |
| Test Example 5 | 62.5 | 56.2 | 30.0 | 9.0 | 6.4 | | | | | |
| Test Example 6 | | | 47.3 | 35.2 | 25.9 | 42.2 | 75.1 | | | |
| Test Example 7 | 68.1 | 38.1 | 39.0 | 10.9 | 19.6 | | | | | |
| Test Example 8 | 55.5 | 48.9 | 48.7 | 49.5 | | | | | | |
| Test Example 9 | | | | | | | | 13.1 | 13.9 | 13.1 |
| Test Example 10 | | | | | | | | 9.9 | 2.0 | 9.3 |
| Test Example 11 | | | | | | | | | | |
| Test Example 12 | 85.9 | | | | | | | | | |
| Test Example 13 | 77.3 | | | | | | | | | |
| Test Example 14 | 54.6 | | | | | | | | | |
| Test Example 15 | 54.2 | | | | | | | | | |
| Test Example 16 | 86.3 | | | | | | | | | |
| Test Example 17 | 85.6 | | | | | | | | | |

As is apparent from Tables 1 and 2, as a result of the human β2-MG adsorption test of the present invention show a small adsorption amount of human β2-MG when compared with those of Comparative Examples, and is effective for the suppression of adsorption of a trace amount of a body component and the collection with a high yield.

Industrial Applicability

The production method of the present invention is remarkably useful from a view point of preventing adsorption loss when a trace amount of a protein and/or a peptide is treated and analyzed, and contributes to medical science, particularly finding of human diseases when used for proteome analysis.

**Claims**

1.  A method for producing a resin molding, comprising a step of bringing an aqueous solution of a nonionic surfactant into contact with a resin molding by immersing the resin molding in the aqueous solution and a step of irradiating the resin molding contacted with the aqueous solution with radiation rays and then taking the resin molding out of the aqueous solution, wherein the concentration of the surfactant in the aqueous solution is 0.05 times to 500 times the critical micelle concentration of the surfactant at 25°C, and wherein the surfactant is represented by the formula 1:
    [Chemical Formula 1]

$$R_1\text{- }(OR_2)_n\text{- }OR_3 \qquad \text{Formula 1}$$

    wherein $R_1$ represents a linear or branched alkyl group having 1 to 30 carbon atoms, an alkenyl group, an alkynyl group, or $R_4$- A- (in which $R_4$ represents a linear or branched alkyl, alkenyl or alkynyl group having 1 to 18 carbon atoms, and A represents a phenylene group), $R_2$ represents an alkylene group having 2 or 3 carbon atoms, $R_3$ represents H, $CH_3$ or $CH_2CH_3$, and n represents a number of 1 to 100.

2.  The method for producing a resin molding according to claim 1, wherein the aqueous solution contains a water-soluble inorganic salts in a concentration of 50 mmol/L to 300 mmol/L.

3.  The method for producing a resin molding according to claim 1 or claim 2, wherein $R_2$ has 2 carbon atoms.

4.  The method for producing a resin molding according to any one of claims 1 to 3, wherein n is a number of 5 to 80.

5.  The method for producing a resin molding according to any one of claims 1 to 4, wherein $R_1$ has 5 to 25 carbon atoms.

6.  The method for producing a resin molding according to any one of claims 1 to 5, wherein $R_1$ is $R_4$-A- and $R_4$ has 7 to 10 carbon atoms.

7.  The method for producing a resin molding according to any one of claims 1 to 6, wherein the surfactant has HLB of 10 or more.

**Patentansprüche**

1.  Verfahren zur Herstellung eines Harzformkörpers, das Folgendes umfasst: einen Schritt der Herstellung eines Kontakts zwischen einer wässrigen Lösung eines nichtionischen Tensids und einem Harzformkörper durch Eintauchen des Harzformkörpers in die wässrige Lösung und einen Schritt der Bestrahlung des mit der wässrigen Lösung kontaktierten Harzformkörpers mit Bestrahlungsstrahlen und des anschließenden Herausnehmens des Harzformkörpers aus der wässrigen Lösung, worin die Konzentration des Tensids in der wässrigen Lösung das 0, 05fache bis 500fache der kritischen Mizellenkonzentration des Tensids bei 25 °C ausmacht und worin das Tensid durch die Formel 1 dargestellt wird:
    [chemische Formel 1]

$$R_1\text{- }(OR_2)_n\text{- }OR_3 \qquad \text{Formel 1}$$

    worin $R_1$ für eine unverzweigte oder verzweigte Alkylgruppe mit 1 bis 30 Kohlenstoffatomen, eine Alkenylgruppe, eine Alkinylgruppe oder $R_4$- A- steht (worin $R_4$ für eine unverzweigte oder verzweigte Alkyl-, Alkenyl- oder Alkinylgruppe mit 1 bis 18 Kohlenstoffatomen steht und A für eine Phenylengruppe steht), $R_2$ für eine Alkylengruppe mit 2 oder 3 Kohlenstoffatomen steht, $R_3$ für H, $CH_3$ oder $CH_2CH_3$ steht und n für eine Zahl von 1 bis 100 steht.

2. Verfahren zur Herstellung eines Harzformkörpers nach Anspruch 1, worin die wässrige Lösung wasserlösliche anorganische Salze in einer Konzentration von 50 mmol/l bis 300 mmol/l enthält.

3. Verfahren zur Herstellung eines Harzformkörpers nach Anspruch 1 oder Anspruch 2, worin $R_2$ 2 Kohlenstoffatome aufweist.

4. Verfahren zur Herstellung eines Harzformkörpers nach einem der Ansprüche 1 bis 3, worin n eine Zahl von 5 bis 80 ist.

5. Verfahren zur Herstellung eines Harzformkörpers nach einem der Ansprüche 1 bis 4, worin $R_1$ 5 bis 25 Kohlenstoffatome aufweist.

6. Verfahren zur Herstellung eines Harzformkörpers nach einem der Ansprüche 1 bis 5, worin $R_1$ = $R_4$-A- ist und $R_4$ 7 bis 10 Kohlenstoffatome aufweist.

7. Verfahren zur Herstellung eines Harzformkörpers nach einem der Ansprüche 1 bis 6, worin das Tensid einen HLB-Wert von 10 oder mehr aufweist.

## Revendications

1. Procédé pour produire un moulage en résine, comprenant une étape consistant à porter une solution aqueuse d'un tensioactif non- ionique en contact avec un moulage en résine par immersion du moulage en résine dans la solution aqueuse, et une étape consistant à irradier le moulage en résine en contact avec la solution aqueuse avec des rayons d'irradiation, puis à retirer le moulage en résine de la solution aqueuse, dans lequel la concentration du tensioactif dans la solution aqueuse est de 0, 05 fois à 500 fois la concentration micellaire critique du tensioactif à 25°C, et dans lequel le tensioactif est représenté par la formule 1 : [Formule chimique 1]

$$R_1\text{- }(OR_2)_n\text{- }OR_3 \qquad \text{Formule 1}$$

dans laquelle $R_1$ représente un groupe alkyle linéaire ou ramifié ayant 1 à 30 atomes de carbone, un groupe alcényle, un groupe alcynyle, ou $R_4$- A- (où $R_4$ représente un groupe linéaire ou ramifié alkyle, alcényle ou alcynyle ayant 1 à 18 atomes de carbone, et A représente un groupe phénylène), $R_2$ représente un groupe alkylène ayant 2 ou 3 atomes de carbone, $R_3$ représente H, $CH_3$ ou $CH_2CH_3$, et n représente un nombre de 1 à 100.

2. Procédé pour produire un moulage en résine selon la revendication 1, dans lequel la solution aqueuse contient des sels inorganiques solubles dans l'eau à une concentration de 50 mmol/l à 300 mmol/l.

3. Procédé pour produire un moulage en résine selon la revendication 1 ou la revendication 2, dans lequel $R_2$ a 2 atomes de carbone.

4. Procédé pour produire un moulage en résine selon l'une quelconque des revendications 1 à 3, dans lequel n est un nombre de 5 à 80.

5. Procédé pour produire un moulage en résine selon l'une quelconque des revendications 1 à 4, dans lequel $R_1$ a 5 à 25 atomes de carbone.

6. Procédé pour produire un moulage en résine selon l'une quelconque des revendications 1 à 5, dans lequel $R_1$ est $R_4$-A- et $R_4$ a 7 à 10 atomes de carbone.

7. Procédé pour produire un moulage en résine selon l'une quelconque des revendications 1 à 6, dans lequel le tensioactif a un indice HLB de 10 ou plus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002542163 PCT
- JP 2003130882 A
- JP 58040323 A
- JP 3297707 B
- JP 61225653 A
- WO 06025352 A
- US 2005024456 A1
- WO 9805269 A
- WO 2005069889 A2

**Non-patent literature cited in the description**

- **PARK et al.** *Journal of Biomaterials Science, Polymer Edition,* 2000, vol. 11 (11), 1121-1134